# EUROPÄISCHE PATENTANMELDUNG

(11) **EP 2 620 244 A1**
(43) Veröffentlichungstag der Anmeldung: **31.07.2013**
(21) Anmeldenummer: 13152168.4
(22) Anmeldetag: 22.01.2013
(51) Int. Cl.: B23D 31/04

(54) **Vorrichtung und Verfahren zum Besäumen von Bändern**

(30) Priorität: 25.01.2012 DE 102012201026
(71) Anmelder: SMS Siemag AG, 40237 Düsseldorf (DE)
(72) Erfinder: Breuer, Dr. Michael, 57271 Hilchenbach (DE); Wahlen, Volker, 47166 Duisburg (DE); Degner, Dr. Michael, 44267 Dortmund (DE)
(74) Vertreter: Klüppel, Walter

(57) **Zusammenfassung**

Die vorliegende Erfindung betrifft eine Vorrichtung (1) zum Besäumen von Bändern (2), bevorzugt in einem Warm- oder Kaltwalzwerk, umfassend eine Besäumschere (3) und eine Zuführvorrichtung (4) zum Zuführen des Saumspanes (20) zu einer Saumteilschere (5), wobei die Zuführvorrichtung (4) mindestens ein Verstellmittel (6) zur Verstellung der Zuführposition des Saumspanes (20) zur Saumteilschere (5) aufweist.

## Beschreibung

### Technisches Gebiet

Die vorliegende Erfindung betrifft eine Vorrichtung zum Besäumen von Bändern, insbesondere von in einem Warm- oder Kaltwalzwerk hergestellten Metallbändern, sowie ein Verfahren zum Besäumen der Bänder.

### Stand der Technik

Bei der Herstellung von gewalzten Bändern in Warm- oder Kaltwalzwerken ist es bekannt, die gewalzten Bänder mittels einer Besäumschere an den Rändern zu besäumen. Die Besäumscheren sind dabei in der Regel als Kreismesserscheren ausgebildet. Der von der Besäumschere vom eigentlichen Besäumband abgetrennte Saumspan wird üblicherweise einer Saumteilschere bzw. einem Zerhackermesser zugeführt, derart, dass der entstehende Schrott zum einen gut gelagert werden kann und zum anderen einfach weiterverarbeitet und wieder aufgeschmolzen werden kann.

Der Saumspan wird üblicherweise über Zuführvorrichtungen, beispielsweise in Form eines Schachtkanals, der jeweiligen Saumteilschere zugeführt. Die Saumteilschere, die auch als Saumhacker bezeichnet wird, dient entsprechend dazu, den Saumspan zu zerkleinern.

Ein solcher Saumführungskanal ist beispielsweise in der EP 0 207 349 A1 beschrieben.

Eine weitere Ausbildung einer solchen Zuführvorrichtung zum Zuführen des Saumspanes zu einer Saumteilschere ist beispielsweise in der DE 38 40 633 A1 beschrieben.

Die herkömmliche Ausbildung der entsprechenden Zuführvorrichtungen bzw. der entsprechenden Schachtkanäle zum Zuführen des Saumspanes zu der Saumteilschere ist im Wesentlichen feststehend, so dass beim Besäumen eines bestimmten Bandtyps der Saumspan stets an der gleichen Zuführposition auf die Saumteilschere auftrifft. Entsprechend findet eine hohe Abnutzung der Saumteilschere statt, so dass die Standzeiten der Saumteilschere reduziert sind.

### Darstellung der Erfindung

Entsprechend ist es eine Aufgabe der vorliegenden Erfindung, die Standzeit der Saumteilschere zu erhöhen.

Die Aufgabe wird durch eine Vorrichtung zum Besäumen von Bändern mit den Merkmalen des Anspruchs 1 gelöst. Vorteilhafte Weiterbildungen sind in den abhängigen Ansprüchen angegeben.

Entsprechend wird eine Vorrichtung zum Besäumen von Bändern, bevorzugt in einem Warm- oder Kaltwalzwerk, umfassend eine Besäumschere und eine Zuführvorrichtung zum Zuführen des Saumspanes zu einer Saumteilschere vorgeschlagen. Erfindungsgemäß weist die Zuführvorrichtung mindestens ein Verstellmittel zur Verstellung der Zuführposition des Saumspanes zur Saumteilschere auf.

Dadurch, dass die Zuführvorrichtung ein Verstellmittel zur Verstellung der Zuführposition des Saumspanes zu der Saumteilschere aufweist, lässt sich die Zuführposition für den Saumspan auf der Saumteilschere verstellen. Entsprechend kann der Auftreffbereich des Saumspanes auf der Saumteilschere variiert werden, so dass entsprechend über die gesamte Breite der Saumteilschere hinweg ein Zerteilen des Saumspanes durchgeführt werden kann. Auf diese Weise werden die thermischen und mechanischen Lasten auf der Saumteilschere gleichmäßiger verteilt, so dass die Messerstandzeiten der Saumteilschere verbessert werden können.

Bevorzugt ist das Verstellmittel als verstellbare Seitenführung ausgebildet, mittels welcher die Zuführposition des Saumspanes verstellbar ist. Durch diese Ausprägung lässt sich auf einfache und zuverlässige Weise eine Verstellung der Zuführposition erreichen.

Hier ist bevorzugt, in einem Schachtkanal zur Zuführung des Saumspanes zu der Saumteilschere ein Verstellmittel in Form mindestens einer verstellbaren Seitenführung vorzusehen, mittels welcher die Zuführposition des Saumspanes verstellbar ist. Entsprechend können bereits in Anlagen vorhandene Komponenten nachgerüstet werden, um die Zuverlässigkeit und Standzeit der Saumteilschere zu verbessern.

In einer vorteilhaften Ausbildung ist mindestens eine Steuervorrichtung vorgesehen, mittels welcher die Zuführposition des Saumspanes über das Verstellmittel manuell, statisch oder automatisch verstellbar ist. Bevorzugt kann die Steuervorrichtung dabei mindestens einen Taktgeber aufweisen, mittels welchem die Zuführposition des Saumspanes taktgesteuert verstellbar ist. Durch die Steuervorrichtung kann die Verstellung der Zuführposition des Saumspanes weitgehend automatisiert durchgeführt werden, so dass die Standzeiten der Saumteilschere ohne weitere Arbeitsbelastung für den jeweiligen Bediener verlängert werden können.

Die oben gestellte Aufgabe wird weiterhin auch durch ein Verfahren mit den Merkmalen des Anspruchs 6 gelöst. Vorteilhafte Weiterbildungen ergeben sich aus den Unteransprüchen.

Entsprechend wird ein Verfahren zum Besäumen von Bändern, bevorzugt in einem Warm- oder Kaltwalzwerk, umfassend das Besäumen des Bandes mittels einer Besäumschere und das Zuführen des Saumspanes zu einer Saumteilschere mittels einer Zuführvorrichtung vorgeschlagen. Erfindungsgemäß wird die Zuführposition des Saumspanes zu der Saumteilschere verstellt.

Bevorzugt wird dabei die Verstellung der Zuführposition des Saumspanes zu der Saumteilschere über eine taktweise Betätigung eines Verstellmittels durchgeführt. Entsprechend kann eine Verlängerung der Standzeit der Saumteilschere automatisiert erreicht werden, ohne dass ein Bediener eingreifen müsste.

In einer Alternative wird die Verstellung der Zuführposition des Saumspanes zu der Saumteilschere auf Basis einer Benutzereingabe durchgeführt.

### Kurze Beschreibung der Figuren

Bevorzugte weitere Ausführungsformen und Aspekte der vorliegenden Erfindung werden durch die nachfolgende Beschreibung der Figuren näher erläutert.

Dabei zeigen:
- Figur 1: eine Vorrichtung zum Besäumen von Bändern in einer schematischen Seitenansicht;
- Figur 2: die Vorrichtung zum Besäumen von Bändern aus Figur 1 in einer schematischen Draufsicht; und
- Figur 3a bis Figur 3c: unterschiedliche Verstellpositionen des Verstellmittels zum Verstellen der Zuführposition in der Vorrichtung zum Besäumen.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet und auf eine wiederholte Beschreibung dieser Elemente wird teilweise verzichtet, um Redundanzen in der Beschreibung zu vermeiden.

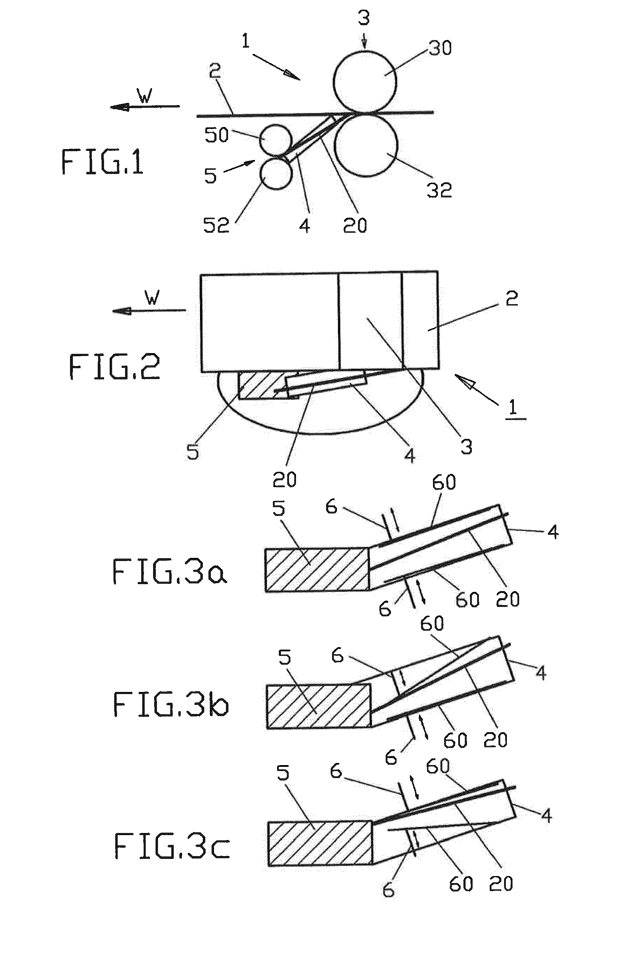

Figur 1 zeigt in einer schematischen Seitenansicht eine Vorrichtung 1 zum Besäumen von Bändern 2, so wie sie typischerweise in einem Warm- oder Kaltwalzwerk zum Besäumen der gewalzten Metallbänder verwendet wird.

Eine Besäumschere 3 in Form der Kreismesserschere, welche ein oberes Kreismesser 30 und ein unteres Kreismesser 32 aufweist, ist vorgesehen, um das Band 2 entsprechend auf ein vorgegebenes Maß an den Bandseiten zu beschneiden. Das Band 2 bewegt sich in Bandlaufrichtung W vorwärts.

Der beim Besäumen vom Band 2 abgetrennte Saumspan 20 wird in einer Zuführvorrichtung 4, welche beispielsweise in Form des in Figur 1 gezeigten Schachtkanals 4 ausgebildet ist, einer Saumteilschere 5 zugeführt. Die Saumteilschere besteht aus einem oberen Saumteilscherenmesser 50 und einem unteren Saumteilscherenmesser 52, welche miteinander zusammenwirken, um den Saumspan 20 entsprechend zu zerhacken, zu zerschneiden, und/oder zu zerkleinern.

Die Zerkleinerung des Saumspans 20 wird durchgeführt, um den dadurch entstehenden Schrott zum einen besser handhaben zu können und zum anderen um ein nachfolgendes Aufschmelzen bzw. Weiterverarbeiten des so gewonnenen Rohstoffes zu erleichtern.

In Figur 2 ist eine schematische Ansicht der in Figur 1 gezeigten Vorrichtung 1 zum Besäumen von Bändern 2 in einer Draufsicht gezeigt.

Das Band 2 wird entsprechend entlang der Bandlaufrichtung W bewegt und die Besäumschere 3 zum Besäumen ist schematisch angedeutet. Der mittels der Besäumschere 3 vom Band 2 abgetrennte Saumspan 20 wird durch den Schachtkanal 4, welcher hier als Zuführvorrichtung dient, der Saumteilschere 5 zugeführt.

Figuren 3a bis 3c zeigen drei unterschiedliche Ausrichtungen der Zuführvorrichtung 4 und der sich daran anschließenden Saumteilschere 5 in einer schematischen Draufsicht. In den drei unterschiedlichen Figuren 3a bis 3c werden durch Einwirkung eines Verstellmittels 6 auf den Saumspan 20 unterschiedliche Zuführpositionen des Saumspanes 20 auf der Saumteilschere 5 erreicht.

Dazu weisen die Verstellmittel 6 beispielsweise bewegliche Seitenführungen 60 auf, welche in ihrer Position verstellt werden können und welche zur seitlichen Führung des Saumspanes 20 dienen.

Beispielsweise ist in Figur 3a eine erste Stellung der beweglichen Seitenführungen 60 gezeigt, in welcher der Saumspan 20 seiner eigentlichen Form folgend auf die Saumteilschere 5 trifft. Daher ist in der in Figur 3a gezeigten Einstellung der beweglichen Seitenführungen 60 der Auftreffpunkt bzw. der Auftreffbereich des Saumspanes 20 auf der Saumteilschere 5 ziemlich genau in deren Mitte bezüglich der Breite der Saumteilschere 5 angeordnet. Die in Figur 3a gezeigte Stellung wird hier auch als "Grundstellung" bezeichnet.

In Figur 3b ist eine weitere Einstellung des Verstellmittels 6 gezeigt, bei welcher eine der beweglichen Seitenführungen 60, nämlich die in der Figur 3b oben angeordnete Seitenführung 60, in den Schachtkanal 4 eingeschwenkt ist. Dadurch wird der Saumspan 20 aus seiner in Figur 3a gezeigten Mittenposition in eine weiter außen liegende Auftreffposition auf der Saumteilschere 5 gezwungen.

In Figur 3c ist entsprechend eine Gegenbewegung zu der in Figur 3b gezeigten ausgeführt, wobei die in der Figur 3c unten liegende bewegliche Seitenführung 60 nun in den Schachtkanal 4 eingeschwenkt ist. Entsprechend wird der Saumspan 20 nun in eine weiter innen liegende Auftreffposition auf der Saumteilschere 5 gezwungen.

Entsprechend kann durch das Betätigen der Verstellmittel 6, bevorzugt der beweglichen Seitenführungen 60, die Zuführposition des Saumspanes 20 auf der Saumteilschere 5 variiert werden.

Durch die Variation der Zuführposition des Saumspanes 20 auf der Saumteilschere 5 kann entsprechend eine bessere Verteilung der mechanischen und thermischen Lasten erreicht werden, derart, dass die Standzeiten der Saumteilschere 5 gegenüber den im Stand der Technik bekannten Vorrichtungen zum Besäumen deutlich erhöht werden.

Die Verstellmittel 6 und bevorzugt die entsprechenden Seitenführungen 60 sind dabei einfach aufzubauen, beispielsweise über einfach angelenkte, verstellbare Seitenwände, welche mittels eines hydraulischen, pneumatischen, elektrischen oder anderen mechanischen Antriebs in ihrer Position verstellt werden können.

Die Betriebskosten für die entsprechend ausgebildete Zuführvorrichtung mit dem Verstellmittel sind sehr gering, da hier lediglich das Verstellmittel selbst betätigt werden muss. Die sich daraus ergebende Effizienzsteigerung ist jedoch sehr hoch, so dass die Produktion zum einen dadurch gesteigert werden kann, dass die Rüstzeiten für einen Messerwechsel in der Saumteilschere 5 reduziert werden können, und zum anderen kann die Reserveteilhaltung reduziert werden, da nur noch eine geringere Anzahl an Saumteilscheren 5 in einem vorgegebenen Zeitraum verbraucht werden.

Die Vorrichtung 1 zum Besäumen von Bändern, so wie sie hier beschrieben ist, kann beispielsweise überall dort eingesetzt werden, wo die Prozesse diskontinuierlich oder auch kontinuierlich erfolgen. Das ist insbesondere auch im Einlauf von folgenden Anlagentypen gegeben: Bandbeizen, diskontinuierliche Tandemstraßen, kontinuierliche Tandemstraßen, Feuerbeschichtungsanlagen, elektrolytische Beschichtungslinien, Kunststoffbeschichtungslinien, Warmbanddressiergerüste, etc.

Mittels einer hier nicht gezeigten Steuervorrichtung können die Verstellmittel 6 entsprechend beim Betrieb der Besäumschere 3 verstellt werden. Dies kann entweder manuell, statisch oder automatisch geschehen. Auf diese Weise werden die Messer der Saumteilschere 5 immer wieder an einer anderen Stelle belastet, so dass die thermischen und mechanischen Belastungen gleichmäßig über die Saumteilschere 5 hinweg verteilt werden können. Dadurch lassen sich die Standzeiten der Saumteilschere 5 deutlich erhöhen.

Die Verstellung der Verstellmittel 6 mittels der Steuervorrichtung kann dabei beispielsweise auch frequenzgeregelt bzw. taktgeregelt gesteuert werden, so dass der Saumspan 20 periodisch über die Breite der Saumteilschere 5 hinweg hin und her geführt wird.

Die entsprechende Frequenz zur Ansteuerung der Verstellmittel 6 sollte dabei so gewählt werden, dass sie unterhalb der Eigenfrequenz des gesamten Systems aus Besäumschere 3, Schachtkanal 4 und Saumteilschere 5 liegt, um schädliche Resonanzschwingungen im System zu vermeiden.

Eine manuelle Verstellung der Zuführposition des Saumspanes 20 auf die Saumteilschere 5 kann auch von einem Anlagenbediener manuell bzw. statisch vorgenommen werden, wobei dieser dann aufgrund seiner betrieblichen Erfahrung abschätzen kann, zu welchem Zeitpunkt eine Verstellung der Zuführposition für eine gleichmäßige Belastung der Saumteilschere 5 sinnvoll ist.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Vorrichtung zum Besäumen von Bändern
- 2: Band
- 20: Saumspan
- 3: Besäumschere
- 30: oberes Kreismesser
- 32: unteres Kreismesser
- 4: Zuführvorrichtung (Schachtkanal)
- 5: Saumteilschere
- 50: oberes Saumteilscherenmesser
- 52: unteres Saumteilscherenmesser
- 6: Verstellmittel
- 60: verstellbare Seitenführung

- W: Bandlaufrichtung

## Patentansprüche

1. Vorrichtung (1) zum Besäumen eines Bandes (2), bevorzugt in einem Warm-oder Kaltwalzwerk, umfassend eine Besäumschere (3) und eine Zuführvorrichtung (4) zum Zuführen des Saumspanes (20) des Bandes zu einer Saumteilschere (5),
**dadurch gekennzeichnet, dass**
die Zuführvorrichtung (4) mindestens ein Verstellmittel (6) zur Verstellung der Zuführposition des Saumspanes (20) zur Saumteilschere (5) aufweist.

2. Vorrichtung gemäß Anspruch 1, wobei das Verstellmittel (6) als verstellbare Seitenführung (60) ausgebildet ist, mittels welcher die Zuführposition des Saumspanes (20) verstellbar ist.

3. Vorrichtung gemäß Anspruch 1 oder 2, wobei in einem Schachtkanal (4) zur Zuführung des Saumspanes (20) zu der Saumteilschere (5) ein Verstellmittel (6) in Form mindestens einer verstellbaren Seitenführung (60) vorgesehen ist, mittels welcher die Zuführposition des Saumspanes (20) zu der Saumteilschere (5) verstellbar ist.

4. Vorrichtung gemäß einem der vorstehenden Ansprüche, wobei mindestens eine Steuervorrichtung vorgesehen ist, mittels welcher die Zuführposition des Saumspanes (20) über das Verstellmittel (6) manuell, statisch oder automatisch verstellbar ist.

5. Vorrichtung gemäß Anspruch 4, wobei die Steuervorrichtung mindestens einen Taktgeber aufweist, mittels welchem die Zuführposition des Saumspanes (20) taktgesteuert verstellbar ist.

6. Verfahren zum Besäumen eines Bandes (2), bevorzugt in einem Warm- oder Kaltwalzwerk, umfassend das Besäumen des Bandes (2) mittels einer Besäumschere (3) und das Zuführen des Saumspanes (20) des Bandes zu einer Saumteilschere (5) mittels einer Zuführvorrichtung (4),
**dadurch gekennzeichnet, dass**
die Zuführposition des Saumspanes (20) zu der Saumteilschere (5) verstellt wird.

7. Verfahren gemäß Anspruch 6, wobei die Verstellung der Zuführposition des Saumspanes (20) zu der Saumteilschere (5) über eine taktweise Betätigung eines Verstellmittels (6) erreicht wird.

8. Verfahren gemäß Anspruch 6, wobei die Verstellung der Zuführposition des Saumspanes (20) zu der Saumteilschere (5) über eine Benutzereingabe durchgeführt wird.
